# EUROPEAN PATENT SPECIFICATION

(11) **EP 2 738 091 B1**
(45) Date of publication and mention of the grant of the patent: **22.07.2015**
(21) Application number: 12400050.6
(22) Date of filing: 30.11.2012
(51) Int. Cl.: B64C 27/20, B64C 27/26, B64C 29/00, B64C 39/06

(54) **Vertical take-off and landing (VTOL) aerial vehicle and method of operating such a VTOL aerial vehicle**
Senkrecht startendes bzw. landendes (VTOL) Luftfahrzeug und Verfahren für den Betrieb eines solchen Luftfahrzeugs
Véhicule aérien pour décollage et atterrissage vertical (VTOL) et procédé de fonctionnement d'un tel véhicule aérien VTOL

(43) Date of publication of application: 04.06.2014
(73) Proprietor: AIRBUS HELICOPTERS DEUTSCHLAND GmbH, 86609 Donauwörth (DE)
(72) Inventor: Cvrlje, Tomislav, 81929 München (DE)
(74) Representative: Pouillot, Laurent Pierre Paul

(56) References cited:
- EP-A1- 0 667 283
- US-A- 2 988 301
- US-A- 3 002 709
- US-A- 5 152 478
- US-A1- 2009 321 554
- US-B1- 6 270 038

## Description

The invention relates to a Vertical Take-off and Landing (VTOL) aerial vehicle, e. g. a rotorcraft with long range and high cruising speed capability according to the preamble of claim 1 and to a method of operating such a VTOL aerial vehicle according to the preamble of claim 20.

There have been numerous attempts to combine the efficiency and performance of fixed-wing aircrafts in forward flight and the advantageous hover and vertical take-off capabilities of helicopters.

The compound helicopters and the convertiplanes are basically the most relevant concepts aiming to overcome the horizontal flight deficiencies of pure helicopters by introducing attributes of fixed-wing aircrafts. However, all concepts represent a compromise between both aircraft types which has always to be conveniently adapted to the planned mission profile of the aircraft.

Compound helicopters are characterized by a lift compounding and a thrust compounding or by a combination of both. Compound helicopters basically aim to off-load the main rotor from its simultaneous lifting and propulsive duties to allow for higher forward speeds.

A lift compounding entails adding wings to a pure helicopter hence enabling to increase the load factor of the aircraft and to reach a higher manoeuvrability. This improves the efficiency of the aircraft at moderately high speed but at the expense of reduced efficiencies at lower forward speeds and in the hover.

A thrust compounding implies the addition of auxiliary propulsion devices. This has been typically accomplished either by means of a single or a pair of propellers being driven by drive shafts powered by main turbo-shaft engines or by the use of additional engines.

A more extended configuration of a compound helicopter includes both the addition of wings and propulsion units. The lift during cruise is simultaneously provided by the main rotor - in powered condition - usually addressed as "hybrid helicopter" - or in autorotation ("autogyro") modus - and wings. The compound helicopter hence overcomes the main rotor lift limits by means of the wings and the rotor thrust limits by means of the propulsion units. As a result, the benefit of a higher load factor is obtained along with potential for higher speed of the compound helicopter. The use of a pair of thrust propulsion units enables for a simultaneous torque correction.

The document US 2009/0321554 A1 discloses a hybrid helicopter including firstly an airframe provided with a fuselage and a lift-producing surface, together with stabilizer surfaces, and secondly with a drive system constituted by: a mechanical interconnection system between firstly a rotor of radius (R) with collective pitch and cyclic pitch control of the blades of the rotor, and secondly two propellers with collective pitch control of the blades of the propellers; and at least one turbine engine driving the mechanical interconnection system. The outlet speeds of rotation of the at least one turbine engine, of the two propellers, of the rotor and of the mechanical interconnection system are mutually proportional, the proportionality ratio being constant. The disclosure of US 2009/0321554 A1 is integrated into the present application.

A drawback of helicopter configurations is both the downwash generated by the main rotor which is hitting the fuselage and the interference of the flow produced by the rotor with the wings and/or the propellers used in the forward flight mode. The result of this condition is a loss of efficiency and an increased noise and vibration signature of the helicopter, both features which are detrimental to operate the helicopter for commercial purposes economically and efficiently.

In addition, the tail boom of helicopter configurations can give rise to vibration known to the person skilled in the art as "tail shake". It should be observed that this "tail shake" phenomenon applies to rotorcraft only. In practice, the main rotor behaves like an aerodynamic exciter. Thus, its wake is turbulent. Turbulence corresponds to variations in pressure, speed, and angle of incidence of the slipstream, which variations are distributed over a rather wide range of relatively high frequencies.

The document US 5,152,478 A discloses an unmanned flight vehicle wherein two counter-rotating rotors are positioned within a toroidal shaped fuselage and in which rotor pitch solely is utilized to generate all required lift, pitch, roll, yaw and vibration and stress control for the vehicle.

Document EP 0 667 283 discloses a VTOL vehicle having a torus-type fuselage.

The document US 6,270,038 B1 discloses an unmanned aerial vehicle that includes a fuselage with a partial toroidal forward portion and an aft portion. A duct is formed through the fuselage and extends from the top to the bottom of the fuselage. Two counter-rotating rotor assemblies are mounted within the duct for providing downward thrust through the duct. The rotor assemblies are supported by a plurality of support struts. At least one engine is mounted within the fuselage and engages with the rotor assemblies. A pusher prop assembly is mounted to the aft portion of the fuselage. The pusher prop assembly is designed to provide forward thrust along the longitudinal axis of the aerial vehicle. The pusher prop assembly includes a drive shaft that is engaged with the engine. A plurality of propellers are attached to and rotated by the drive shaft. A shroud is mounted to the aft portion of the fuselage around the propellers and is operative for channeling the air passing through the propellers in a substantially aft direction. A pair of wings is removably attached to the sides of the fuselage. Each wing preferably includes a fixed portion and a pivotal flaperon portion hinged to the fixed portion. Directional vanes are preferably mounted to the shroud downstream from the propellers and control flow out of the shroud. Deflectors may be mounted to the bottom of the fuselage across a portion of the duct to control flow of air into the duct.

The objective of the invention is to propose a VTOL aerial vehicle with long range and high cruising speed features, for passengers and cargo transportation, effectively and efficiently military and commercially. It is a further objective of the invention to propose a VTOL aerial vehicle having a low vibration and noise signature compared to any helicopter configuration and thus a vertical take-off and landing aerial vehicle securing a standard degree of comfort and safety. It is a further objective of the invention to propose a method of operating such a VTOL aerial vehicle.

A solution is provided with a VTOL aerial vehicle, e. g. a rotorcraft with long range and high cruising speed capability with the features of claim 1. A further solution is provided with a method of operating such a VTOL aerial vehicle with the features of claim 20.

According to the invention a vertical take-off and landing aerial vehicle comprises a torus-type fuselage with a front portion, and a rear portion, used as cabin to transport passengers and cargo. The fuselage is provided as an aerodynamically optimized shroud. Radial inside said torus-type fuselage a duct is formed through the fuselage and extends from a top to a bottom side of the fuselage. The front portion of the fuselage contains a cockpit and preferably a galley compartment. The cockpit layout has been configured to provide the pilots with an excellent work environment. The design of the windshields and windows result in a large, unobstructed field-of-view. The instrument panel and consoles are evolutions from state-of-the art technologies, providing clear displays and controls to the crew. Standard entry into the cockpit is through a passageway from the cabin. The rear portion of the fuselage houses an additional galley compartment, while lavatory compartments are located on each side of the fuselage.

A main rotor is located adjacent the duct through the circular torus-type shroud type fuselage with an axis of rotation in common with a central axis rectangular to a mid-plane through said fuselage. The main rotor is mounted to its hub above or within the duct such that for a stalled main rotor the blade tips are within the profile defined by the fuselage. Pitch control of the rotor blades provide all flight control requirements of the inventive aerial vehicle including lift, pitch, roll and yaw control, by varying flow pattern through the duct. The main rotor is driven by at least one turbo engine, preferable a pair of turbo engines, housed in a power plant assembly unit.

A mechanical interconnection system is provided between the main rotor and the at least one turbo engine within the power plant assembly unit in the centre of the torus-type fuselage. The power plant assembly unit is supported by a plurality of support struts respectively fixed to the fuselage at one end and to the power plant assembly unit at the other end. The mechanical interconnection system connects the main rotor to the at least one turbo engine.

The toroidal fuselage is closed radially around its duct. The supporting struts are hollow to house fuel tanks, cargo and/or passenger and/or aviation and navigation equipment including the required mechanical and service lines mandatory to enable the inventive aerial vehicle to safe flight and control operation. The torus-type fuselage and the supporting struts are fabricated of composite material or metal to have a strong and light weighted structure.

At least two wings are attached symmetrical with regard to a longitudinal axis through the central axis and the mid of the cockpit. Said at least two wings are attached to a periphery of the torus-type fuselage to provide additional lift to the inventive aerial vehicle in high-speed flight. Each of said wings at least partly includes a fixed front portion and a pivotal portion. Said pivotal portion of the wing is used as pitch elevator, hinged to the fixed front portion. Essentially vertical stabilisers are located at a tip of each wing, consisting of a fixed front portion and a steering control surface, capable to provide additional means of yaw control.

Propulsion means (e.g. turboprops or propellers) mounted at each wing generate thrust along the longitudinal axis of the inventive aerial vehicle. Said propulsion means in combination with the wings and torus-type fuselage give the high-speed capability in flight to the inventive aerial vehicle. The mechanical interconnection system connects the at least one turbo engine to the propulsion means for driving said propulsion means. Possible nose up pitching moments induced by the ducted rotor during forward flight of the inventive aerial vehicle are reduced by the wings mounted to the rear portion of the torus-type fuselage according to the present invention by creating a lift component on the rear portion of the inventive aerial vehicle.

The inventive aerial vehicle includes the advantages of both airplanes and helicopters, featuring vertical take-off and landing with long range and high cruising speed capability on one side and equipped with a passengers and cargo compartment, which allows the inventive aerial vehicle to be operated at the same way effectively and efficiently for military and commercially services on the other side.

The torus-type fuselage around the main rotor of the inventive aerial vehicle increases rotor efficiency, as the air flow is able to pass undisturbed through the duct without the disadvantageous effects of the downwash stream interfering with the fuselage as it would be the case for a conventional helicopter configuration.

Moreover, the torus-type fuselage with a ducted shroud, particularly at the inlet and the outlet of the air flow through the duct, provide further system lift capabilities and selective distribution between the main rotor and the fuselage or shroud, i.e. at the front portion of the inlet to increase flow speed through the outlet of the ducted shroud, said ducted shroud having diffuser characteristics. At least a part of the duct is shaped as a diffuser. Said diffuser part of the duct ends at the bottom of the duct with a maximum cross section at least equal to the cross section of the at least one main rotor. Said diffuser has a minimum cross section defined by a ratio of 0.7 to 0.8 to 1 for minimum cross section/maximum cross section. The diffuser characteristics of the duct add to acceleration of the flow speed through the outlet of the ducted shroud for increased thrust and system lift capabilities of the inventive aerial vehicle.

According to an important feature of the invention the blade cyclic pitch of the at least one main rotor is utilized to affect the pattern and velocity of any air flow entering the inlet of the fuselage duct to thereby selectively control the lift generated by the fuselage to affect the control of pitch, roll or yaw of the inventive aerial vehicle. In conjunction with the forces and moments of the fuselage induced through velocity of air flow into the aerodynamically shaped torus all required flight controls for the aerial vehicle are provided.

According to a further important feature of the inventive aerial vehicle the plurality of support struts extending between fuselage and power plant unit assembly house pitch control servos, the drive shaft between the power plant assembly unit housed engine and the main rotor(s) and other equipment, such as stability gyroscopes.

It is an important advantage of the invention that the shroud enclosing the at least one main rotor within the torus-type fuselage prevents the formation of tip vortices and thus improves efficiency of the at least one main rotor. It is a further important advantage of the invention that the shroud enclosing the at least one main rotor within the torus-type fuselage obstructs the free radiation of sound waves and thus reduces the noise emitted by the inventive aerial vehicle. As the at least one main rotor is protected by the shroud in flight mode, the stability of the inventive aerial vehicle is increased; noise and vibration signatures are reduced. On ground or other contact with the environment, the safety is increased by protecting operating personnel near the inventive aerial vehicle from inadvertently being struck when the at least one main rotor is running.

It is still a further important feature of the invention that the control moments produced by the application of cyclic pitch to the main rotor(s) are amplified by control moments generated by the fuselage as a result of said application of cyclic pitch.

The at least one main rotor with its plurality of blades with collective and cyclic pitch control is rotated by a drive shaft connected mechanically via the mechanical interconnection system to the propellers attached to each wing of the inventive aerial vehicle. Collective pitch control of the blades of the propellers provides for additional thrust in forward flight along the longitudinal axis of the inventive aerial vehicle, giving in combination with the wings and torus-type fuselage to the inventive aerial vehicle the high-speed capability in flight. The pitch control of the at least one main rotor, the aerodynamically shaping of the shrouded fuselage and the additional introduction of wings and stabilisers allow generation of all required lift, pitch, roll, yaw forces and moments of the inventive aerial vehicle.

The inventive aerial vehicle uses differential thrust between the wing mounted propulsion means, e. g. propellers, to provide counter torque when the at least one main rotor is operated by a power source.

A smooth and safe vertical landing is provided by means of a hover cushion structure on the bottom surface of the inventive aerial vehicle. Said hover cushion structure is suitable to improve a diffuser characteristic of the shrouded duct defined by the torus-type fuselage.

The circular shape of the fuselage of the inventive aerial vehicle allows a plurality of entrances, to embark and disembark the aircraft efficiently for greater service speed. The circular shape of the fuselage of the inventive aerial vehicle also provides better conditions of visibility.

According to a further preferred embodiment of the invention two coaxial, counter rotating main rotors with in between an axial distance of 1 m to 2 m are provided. With two coaxial, counter rotating main rotors the wing mounted propulsion means can be optimized for higher horizontal speed of the inventive aerial vehicle.

The invention and its advantages appear in greater detail from the following description of embodiments given by way of illustration and with reference to the accompanying figures, in which:
FIG. 1 shows a top view (a), a front elevation view (b) and a side elevation view (c) of an aerial vehicle in accordance with the invention,
FIG. 2 shows cross-section views along a line A - A and along a line B - B of the aerial vehicle in accordance with the invention,
FIG. 3 shows a schematic representation of aerodynamics of the aerial vehicle in accordance with the invention in hover (a) and forward flight (b) configuration mode,
FIG. 4 shows cross-section views along a line A - A and along a line B - B of an alternative aerial vehicle in accordance with the invention, and
FIG. 5 shows a top view (a), a front elevation view (b) and a side elevation view (c) of the alternative aerial vehicle in accordance with the invention.

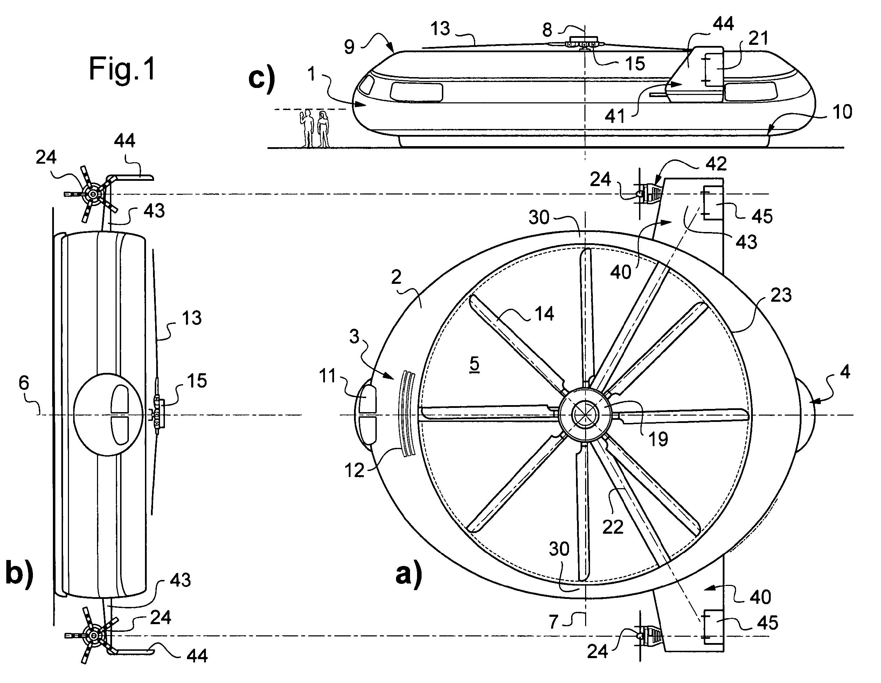

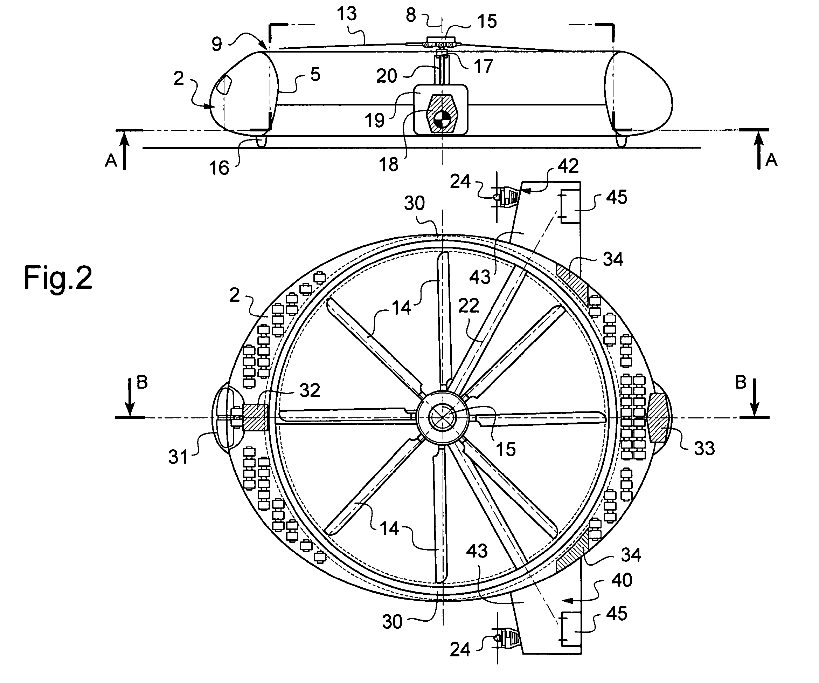

According to Fig. 1a, 1b, 1c and 2 an aerial vehicle 1 comprises a torus-type or toroidal fuselage 2 with a front portion 3 and a rear portion 4. A generally horizontal plane of the aerial vehicle 1 is defined by a longitudinal 6 and a transversal axis 7 with a central axis 8 perpendicular to said plane. A duct 5 is formed through the torus-type fuselage 2 and extends essentially coaxial to said central axis 8 from a top 9 to a bottom 10 radial inside of the torus-type fuselage 2. The torus-type fuselage 2 is aerodynamically formed like a shroud in order to provide an optimum airflow stream through the duct 5 and around the fuselage 2.

Inside the torus-type fuselage 2 is a cabin to transport passengers and cargo. The front portion 3 of the fuselage 2 contains the cockpit 31 and galley 32 compartments. Windshields and windows 11 of the cockpit 31 result in a large, unobstructed field-of-view for pilots inside the cockpit 31. A standard entry (not shown) into the cockpit 31 is through a passageway (not shown) from the cabin. The rear portion 4 of the fuselage 2 houses an additional galley 33 compartment, while lavatory compartments 34, are located on each side of the fuselage 2.

The aerial vehicle 1 is conceived for an operating empty weight of about 38 tons +50/-10%, a maximum take off weight of about 55 tons +60/-10% for 60 to 130 passengers. The height of the aerial vehicle 1 is about 5 m. Between the front portion 3 and the rear portion 4 of the fuselage 2 is on both sides a passageway 30 with a width of up to 0.6 m to 1 m and with a height allowing a passenger to pass without obstructions.

The aerial vehicle 1 has a main rotor 13 with five or alternatively up to eight blades 14 mounted to a rotor hub 15 positioned therewith in the central axis 8 of rotation 0.8 m next to the top 9 above the duct 5. Said duct 5 has an inlet at the shrouded top 9 of the torus shaped fuselage 2. The main rotor 13 provides lift by creating downward flow of air from the inlet through the duct 5 to an outlet at the shrouded bottom 10 with diffuser characteristics. Each blade 14 of the main rotor 13 is linked to a laminated spherical bearing through a sleeve (not shown). A hinge hub architecture involves the laminated spherical thrust bearings providing the pitch, flapping and drag hinges for the eight blades 14. These bearings counteract the centrifugal forces of the rotating blades 14, and transmit the thrust, torque and bending moments from the blades 14 to the rotor hub 15. Lead lag frequency adapters (not shown) are fitted between the rotor hub 15 and each sleeve. The damper characteristics of the lead lag frequency adapters are set to adapt the blades 14 lead lag frequency and damping to avoid any instability in flight with the fuselage 2 or on the ground with a landing device, such as a hover cushion structure 16 or a three point landing gear.

The main rotor 13 is independently controlled through a separate conventional swash plate assembly 17 which selectively articulates the main rotor 13. Motion of the swash plate assembly 17 along the rotor axis 8 will cause the rotor blades 14 of the main rotor 13 to vary pitch collectively and tilting of the swash plate assembly 17 with respect to the rotor axis 8 will cause the rotor blades 14 to vary pitch cyclically. The swash plate assembly 17 is controlled by a separate electronic servo mechanism (not shown) which selectively and independently articulates the swash plate assembly 17 for both, cyclic blade change and collective blade change of the main rotor 13.

The rotor hub 15 of the main rotor 13 is driven by a pair of turbo engines 18 by means of a mechanical interconnection system (not shown). The turbo engines 18 are located in a central power plant assembly unit 19. A conventionally applied drive shaft 20 with appropriate clutch, drive and gearing means transform the power generated by the turbo engines 17, to drive the main rotor 13 about the central axis 8 of the fuselage 2. Air enters a housing of the power plant assembly unit 19 through inlets 12.

A plurality of supporting struts 22 extend from the radial inner surface at the bottom 10 of the fuselage 2 radial inwardly to support the central power plant assembly unit 19. The support struts 22 are aerodynamically shaped and rigidly connected to the fuselage 2. Smooth and safe vertical take-off and landing is provided by means of the hover cushion structure 16 at the bottom 10 of the aerial vehicle 1. The hover cushion structure 16 is conceived to contribute to the diffuser at the bottom 10 of the aerial vehicle 1.

The torus-type fuselage 2 and the supporting struts 22 are hollow and therefore capable to carry fuel tanks, cargo compartments, passenger compartments and aviation and navigation equipment mandatory to enable safe on flight and control operation for the aerial vehicle 1. The fuselage 2 and the struts 22 are made of composite material and/or metal to have a strong and light weighted structure. Moreover the torus-type fuselage 2 is closed to produce maximum strength. A fuselage inlet protection screen 23 is positioned so as to cover the inner circumference of fuselage 2 to protect the cabin of the aerial vehicle 1 from any fractioned parts of the blades 14 in case of a structural failure.

At suitable forward speeds the aerial vehicle 1 has additional lift, to the lift provided by the main rotor 13, with a pair of wings 40 on each outside of the rear portion 4 of the fuselage 2 in a rear half of said fuselage 2. Said wings 40 provide horizontal stabilizer with a fixed front wing portion 43 and a pitch control surface 45 movable relative to the front wing portion 43. Vertical stabilizer elements 41 are located at the lateral end of said wings 40 for steering and stability purposes. The vertical stabilizers 41 comprise a fixed front portion of a fin 44 and a movable rear portion or rudder 21 for yaw control.

The aerial vehicle 1 is propelled by two propulsion means, i. e. turbojets or propellers 24. The propulsion means 24 are driven by said turbo engines 18 by means of a mechanical interconnection system supplying drive not only to the main rotor 3 in rotation, but also supplying drive to said turbojets 24 in rotation using mechanical transmission. The said turbojets 24 are located at each of the outer lateral ends of the wing 40 in front of said vertical stabilizer elements 41 arranged in a respective fairing 42. The supporting struts 22, the fuselage and the wings 40 are conceived to house at least parts of the mechanical transmission of the mechanical interconnection system e. g. for supplying drive to said turbojets 24.

The aerial vehicle 1 is fitted with an integrated drive system that comprises said turbine engines 18, the main rotor 13, the two turbojets 24 and the mechanical interconnection system between these elements. Said integrated drive system is designed and operated according to the disclosure of US 2009/0321554 A1. To avoid repetition reference is made to the disclosure of US 2009/0321554 A1 for the description of said integrated drive system.

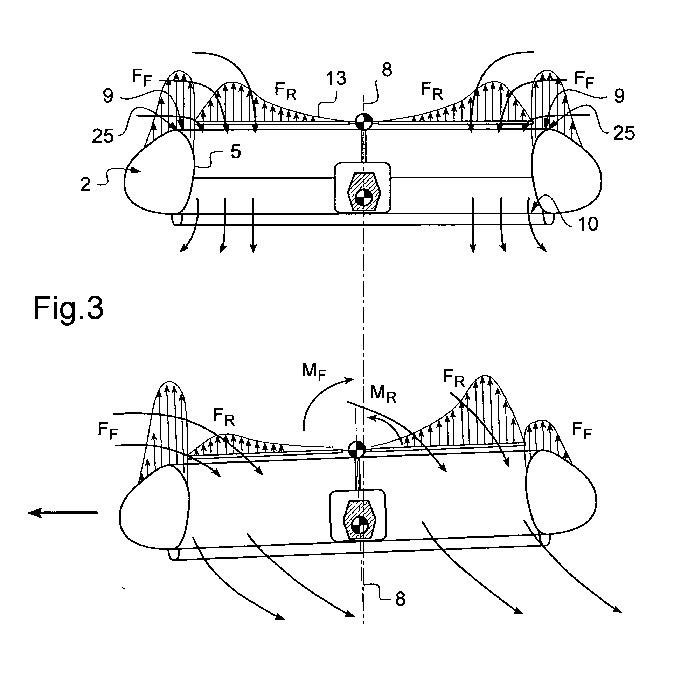

According to FIG. 3a, b corresponding features are referred to with the references of Fig. 1a - 2. According to FIG. 3a in hover configuration mode the aerodynamics of the aerial vehicle 1 are conditioned by the main rotor 13 in operation under collective pitch only. Lift forces F_{R} are generated by the main rotor 13 and lift forces F_{F} are generated also at the duct inlet 25 of the torus shaped fuselage 2, because as the main rotor 13 rotates, it draws air into and across the inlet 25 of fuselage 2 at a high velocity, thereby inducing suction along the top 9 of the fuselage 2 so as to produce lift by means of the fuselage 2. Thus, additive lifts F_{R} and F_{F} are generated by the main rotor 13 by means of the shrouded fuselage 2. The inlet 25 of the fuselage 2 and an offset of 0.8 m +/-50% for the main rotor 13 from the top surface 9 of the fuselage 2 are conceived to selectively share the lift contribution, e. g. with an approximate equal sharing.

In hover configuration mode of the aerial vehicle 1 the propulsion means 24 provide exclusively counter torque to the main rotor 13.

According to FIG. 3b in forward flight configuration mode the aerodynamics of the aerial vehicle 1 are conditioned with the main rotor 13 in operation and under cyclic pitch application to the blades 14 of the main rotor 13. After vertical take off of the aerial vehicle 1, both, collective and cyclic pitch are applied to the main rotor 13. Again the fuselage 2 generates lift forces F_{F} and the main rotor 13 generates additive lift F_{R}. Supplementary the main rotor 13 generates a pitching moment M_{R} and the shrouded fuselage 2 generates a pitching moment M_{F}. A substantial amount of the total moment M_{R} and M_{F} is produced by the shrouded fuselage 2, as compared to the moment M_{R} produced by the main rotor 13. Changes in main rotor lift F_{R} produce changes in the fuselage lift F_{F} and the pitching moments M_{R} and M_{F}. Therefore main rotor control results in amplification for the forward flight characteristics of the aerial vehicle 1.

The free stream velocity in forward flight V₀ is additive to and serves to increase the suction velocity of the main rotor 13 over the forward section of the torus-type fuselage 2. The free stream velocity in forward flight V₀ serves to decrease correspondingly the inlet velocity over the aft section. The resulting inflow velocity towards the duct 5 at the forward section 3 is therefore substantially larger than the velocity of the air entering the duct 5 of fuselage 2 over the rear section 4. The air velocities during forward flight result in a pressure or lift distribution differential with a lift F_{F} substantially larger at the forward section 3 than at the rear section 4 of the fuselage 2, thus producing a nose-up moment M_{F} for the aerial vehicle 1 in forward flight.

In forward flight and with both collective and cyclic pitch applied to the main rotor 3 the lift or moment creating characteristics of fuselage 2 are usually tuned to produce a nose-up moment M_{F}. Cyclic pitch of the main rotor 3 may as well be tuned so as to cause the flow of inlet air into the shrouded duct 25 to have a maximum at the rear section 4 of fuselage 2, thus creating a counteracting nose-down moment M_{F} on the fuselage 2 which co-acts with the nose-down moment M_{R} produced by the main rotor 3.

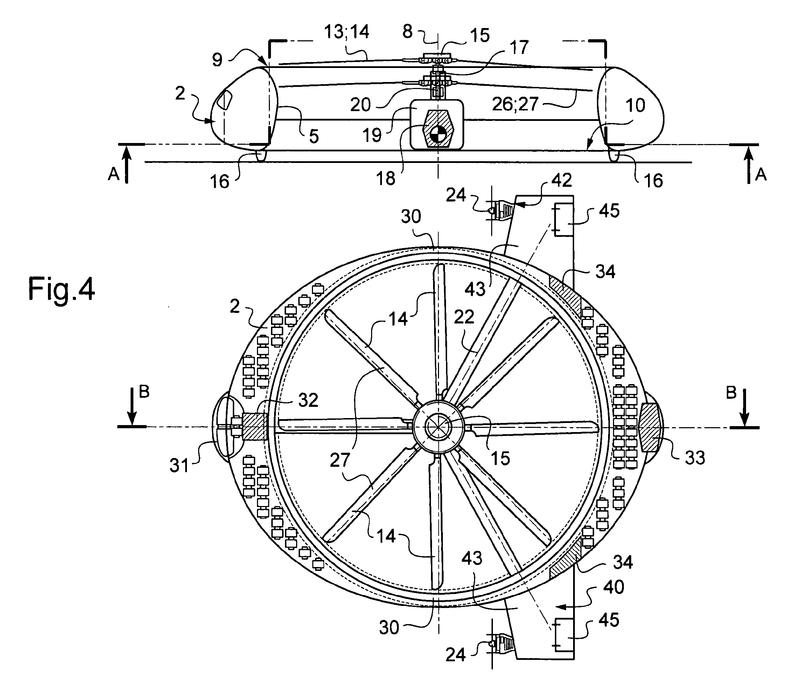

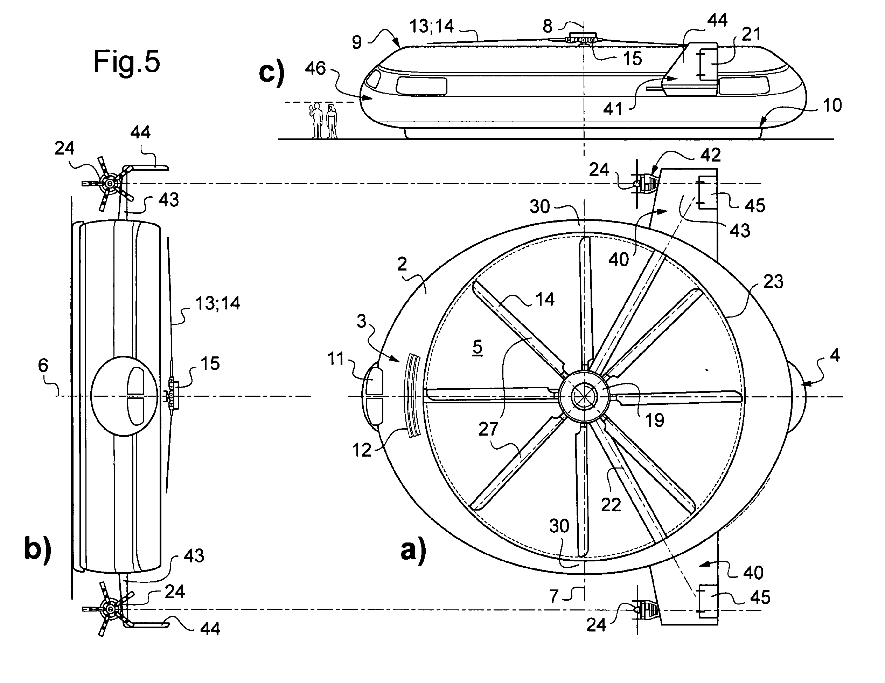

According to FIG. 4, 5 corresponding features are referred to with the references of Fig. 1a - 3. Additional to the main rotor 13 a co-axial rotor 26 is provided for an alternative aerial vehicle 46. Said co-axial rotor 26 is counter rotating with regard to the main rotor 13. Said co-axial rotor 26 is mounted to the drive shaft 20 inside the duct 5 with an axial distance of 1 m to 2 m, preferably 1.5 m below the main rotor 13 to avoid collision of the blades 14 of the main rotor 13 with the further blades 27 of the co-axial rotor 26.

### Method of operating the VTOL aerial vehicle 1, 46

The turbo engines 18 of aerial vehicle 1, 46 continuously drive the main rotor(s) 13, 26 in rotation by means of the mechanical interconnection system. The speeds of rotation of the outlet from the pair of turbine engines 18, of the propellers of the pair of propulsion means 24, of the main rotor(s) 13, 26 and of said mechanical interconnection system are mutually proportional, with the proportionality ratio being constant whatever is the flying configuration of the aerial vehicle 1, 46.

For vertical take off or landing and for hovering of the aerial vehicle 1, 46 lift is provided by means of said main rotor(s) 13, 26. With counter rotating main rotors 13, 26 of the aerial vehicle 46 the counter torque can be supplied without any supplemental propulsion means 24. If only one main rotor 13 is provided differential horizontal thrust for counter torque is provided by means of said two propulsion means 24 arranged laterally outside said fuselage 2 of the aerial vehicle 1 i.e. the differential thrust is created by a difference between the thrusts exerted by the respective turbojets 24, i. e. in vertical flight, turbojet 24 on the left outside of the fuselage 2 exerts thrust towards the rear of the aerial vehicle 1 while the opposed turbojet 24 on the right outside of the fuselage 2 produces thrust towards the front, assuming that the main rotor 13 rotates anticlockwise seen from above.

The anti-torque function can as well be performed by a single turbojet 24, i. e. the right turbojet 24 develops double thrust while the left turbojet 24 does not provide any thrust. The main rotor 13 must then be inclined towards the rear of the aerial vehicle 1 in order to balance the thrust from the right turbojet 24.

The main rotor(s) 13, 26 serve to provide all of the lift of the aerial vehicle 1, 46 during take-off, landing, vertical flight and some of the lift during cruising flight. The lift of the aerial vehicle 1, 46 is controlled by adapting the collective pitch of the blades 14, 27 of said main rotor(s) 13, 26.

After take off lift with a horizontal component can be provided by selectively applying longitudinal cyclic pitch to the respective blades 14, 27 of said main rotor(s) 13, 26 to thereby produce pitch forces on both the main rotor(s) 13, 26 and the fuselage 2 of the aerial vehicle 1, 46. Additional pitch forces can be provided by means of both of the pitch control surfaces 45 movable in the rear portion of the aerial vehicle 1, 46.

After take off any roll of the aerial vehicle 1, 46 is controlled by selectively applying lateral cyclic pitch to the blades 14, 27 of said main rotor(s) 13, 26 as a function of flight conditions to thereby produce roll forces on both the main rotor(s) 13, 26 and the fuselage 2 of the aerial vehicle 1. Additional roll forces can be provided by one of the pitch control surfaces 45 movable in the rear portion 4 of the aerial vehicle 1, 46.

After take off any yaw control is provided to said aerial vehicle 1, 46 by applying differential thrust between said at least two turbojets 18 as a function of flight conditions to thereby produce the required torque differential for yaw control. Yaw forces can be provided as well by both of the movable steering rudders 21 of the vertical stabilizer 41 in the rear portion of the aerial vehicle 1, 46.

After take off any nose-up moment created by the torus-type fuselage 2 during forward flight is abated by selectively applying cyclic pitch to said main rotor(s) 13, 26 to selectively vary the pattern of air flowing into said duct 5 to thereby produce a counteracting pitching moment on said torus-type fuselage 2 and to thereby reduce the total nose-up pitching moment created by the fuselage 2 in forward flight until the total nose-up pitching moment is substantially equal to the nose-down pitching moment created by the main rotor(s) 13, 26.

For forward flight the propulsion means 24 exert thrust towards the rear of the aerial vehicle 1, 46 for propulsion. The wings 40 contribute to provide part of the lift for supporting said aerial vehicle 1 , 46.

### Reference List

- 1: aerial vehicle
- 2: torus shaped fuselage
- 3: front portion
- 4: rear portion
- 5: duct
- 6: longitudinal axis
- 7: transversal axis
- 8: central axis
- 9: top
- 10: bottom
- 11: window
- 12: inlet lip
- 13: main rotor
- 14: blades
- 15: rotor hub
- 16: hover cushion structure
- 17: swash plate assembly
- 18: turbo engines
- 19: power plant assembly unit
- 20: drive shaft
- 21: steering rudder
- 22: support strut
- 23: protection screen
- 24: propulsion means
- 25: duct inlet
- 26: co-axial rotor
- 27: further blade
- 30: Passageway
- 31: cockpit
- 32: galley
- 33: additional galley
- 34: lavatory compartments
- 40: wings
- 41: vertical stabilizers
- 42: fairing
- 43: front wing portion
- 44: fin
- 45: pitch control surface
- 46: alternative aerial vehicle

## Claims

1. A vertical take-off and landing aerial vehicle (1, 46) comprising:
a. a power plant assembly unit (19) with at least one main rotor (13, 26),
b. a torus-type fuselage (2), wherein a mid-plane through said fuselage is defined by a longitudinal and a transversal axis (6, 7), said torus-type fuselage (2) having radial inside a duct (5) with a central axis (8) perpendicular to said plane, said duct (5) being between a top (9) and a bottom (10) of said torus-type fuselage (2) and said at least one main rotor (13, 26) having a rotation axis essentially coaxial with the central axis (8) of said duct (5), said fuselage (2) having a front and rear portion (3, 4) along said longitudinal axis (6),
c. a pair of lateral wings (40) attached opposed to each other outside the fuselage (2), and
d. an integrated drive system comprising:
d1. a plurality of support struts (22) between the power plant assembly unit (19) and the fuselage (2),
d2. at least one engine (18) in the power plant assembly unit (19) for driving said at least one main rotor (13, 26), and
d3. a mechanical interconnection system between said at least one engine (18) and said at least one main rotor (13, 26), wherein
d4. at least two propulsion means (24) are provided with respective rotation axis essentially directed parallel to said longitudinal axis (6),
**characterised in that** at
least one of said propulsion means (24), e. g. propellers or turbojets, is fitted to each of said wings (40) and the mechanical interconnection system being connected to the propulsion means (24) for driving said propulsion means (24).

2. The aerial vehicle (1, 46) according to claim 1, wherein said engine comprises two turbo engines (18) mounted in a central power plant assembly unit (19).

3. The aerial vehicle (46) according to claim 1, wherein two coaxial, counter rotating main rotors (13, 26) with in between an axial distance of 1 m to 2 m are provided.

4. The aerial vehicle (1, 46) according to claim 1, wherein a plurality of support struts (22) are fixed to a radial inner circumference at the bottom (10) of the torus-type fuselage (2).

5. The aerial vehicle (1, 46) according to claim 1, wherein the integrated drive system comprises means of control for the attitude of the aerial vehicle (1) in lift, pitch, roll and yaw in both hover and forward flight, preferably comprising means for applying both collective and cyclic pitch changes to the blades (14, 27) of said at least one main rotor(s) (13, 26) depending on the forces and moments induced by airflow through and along the torus-type fuselage (2).

6. The aerial vehicle (1, 46) according to claim 1, wherein a hover cushion system (16) is provided at the bottom (10) of the fuselage (2) as landing and starting assistance device and as a diffusion part.

7. The aerial vehicle (1, 46) according to claim 1, wherein at least one main rotor (13, 26) is located at level with the top (9) of the fuselage (2).

8. The aerial vehicle (1, 46) according to claim 1, wherein stabilizing and manoeuvring control surfaces (45) for pitch are provided at the wings (40), said pitch control surfaces (45) being movable relative to the front portion of the wing (40).

9. The aerial vehicle (1, 46) according to claim 1, wherein stabilizing and manoeuvring surfaces with at least one fin (44) and a steering control surface as vertical stabilizer (41) are provided at lateral ends of the wings (40), said at least one steering control surface being movable relative to the front portion of the fin (44).

10. The aerial vehicle (1, 46) according to claim 1, wherein said mechanical interconnection system is provided with collective pitch and cyclic pitch control means of the blades (14, 27) of the at least one main rotor (13, 26) and with collective pitch control of propeller blades of said propulsion means (24).

11. The aerial vehicle (1, 46) according to claim 2, wherein the power plant assembly unit (19) is mounted below or within the duct (5) adjacent to the bottom (10) of the fuselage (2).

12. The aerial vehicle (1, 46) according to claim 1, wherein said supporting struts (22) are hollow as space for cargo and passenger(s), vehicle flight and control systems including control and service lines, fuel and/or mechanical interconnection systems.

13. The aerial vehicle (1, 46) according to claim 1 wherein the at least one main rotor (13, 26) has a diameter of 12 m to 25 m or 16 m to 22 m and an air inlet lip (12) established by the torus-type fuselage (2) is always outside of the at least one main rotor (13, 26) with a radius between 13 m and 7 m.

14. The aerial vehicle (1, 46) according to claim 1, wherein said support struts (22) are fabricated of lightweight, composite material or metal.

15. The aerial vehicle (1, 46) according to claim 1, wherein said fuselage (2) is shaped as a closed torus.

16. The aerial vehicle (1) according to claim 1 wherein the at least two propulsion means (24) are propellers and wherein the difference in collective pitch of the propeller blades of at least one propeller (24) on one side of the fuselage (2) relative to the propeller blades of at least one propeller (24) on the opposed side of the fuselage (2) evolves a differential of thrust between both propellers (24), said differential of thrust being directed against the torque generated by one main rotor (13).

17. The aerial vehicle (1, 46) according to claim 1, wherein the wings (40) are in the rear portion (4) of the aerial vehicle (1, 46) and the wings (40) are profiled to provide additional lift forces at forward flight.

18. The aerial vehicle (1) according to claim 1, wherein at least a part of the duct (5) is shaped as a diffuser, said diffuser part of the duct (5) ending at the bottom of the duct (5) with a maximum cross section at least equal to the cross section of the at least one main rotor (13, 26), said diffuser having a minimum cross section defined by a ratio of 0.7 to 0.8 to 1 for minimum cross section/maximum cross section.

19. The aerial vehicle (1) according to claim 1, wherein the fuselage (2) houses substantially symmetric passenger and/or cargo compartments in its front (3) and its rear portions (4).

20. A method of operating an aerial vehicle (1, 46) according to any of the preceding claims, **characterized by**:
providing lift to the aerial vehicle (1, 46) by means of said at least one main rotor (13, 26) and
providing horizontal thrust and/or counter torque to the aerial vehicle (1, 46) by means of said propulsion means (24) arranged laterally outside said fuselage (2).

21. The method according to claim 20, **characterized by**:
controlling the lift by adapting the collective pitch of the blades (14, 27) of said at least one main rotor (13, 26) as a function of flight conditions to thereby produce lift creating forces on both the main rotor (13, 26) and the fuselage (2).

22. The method according to claim 20, **characterized by**:
controlling the aerial vehicle (1, 46) by selectively applying longitudinal cyclic pitch to the blades (14, 27) of said at least one main rotor (13, 26) as a function of flight conditions to thereby produce pitch forces on both of the at least one main rotor (13, 26) and the fuselage (2).

23. The method according to claim 22, **characterized by**:
creating in flight mode of the aerial vehicle (1, 46) additional pitch forces by means of both of the pitch control surfaces (45) movable in the rear portion (4) of the fuselage (2).

24. The method according to claim 20, **characterized by**:
controlling vehicle roll by selectively applying lateral cyclic pitch to the blades (14, 27) of said at least one main rotor (13, 26) as a function of flight conditions to thereby produce roll forces on both the at least one main rotor (13, 26) and the fuselage (2).

25. The method according to claim 24, **characterized by**:
creating in flight mode of the aerial vehicle (1, 46) additional roll forces by one of the pitch control surfaces (45) movable in the rear portion (4) of the fuselage (2).

26. The method according to claim 20, **characterized by**:
providing yaw control to said aerial vehicle (1, 46) by applying in flight mode a differential of thrust between said at least two propulsion means (24) as a function of flight conditions to thereby produce the required torque differential to effect yaw control.

27. The method according to claim 20, **characterized by**:
creating in flight mode of the aerial vehicle (1, 46) yaw forces by both of the movable steering rudders (21) of the vertical stabilizer (41) in the rear portion (4) of the fuselage (2).

28. The method according to claim 20, **characterized by**:
abating any nose-up moment created by the torus-type fuselage (2) during forward flight by selectively applying cyclic pitch to said at least one main rotor (13, 26) to selectively vary the pattern of air flowing into said duct (5) to thereby produce a counteracting pitching moment on said torus-type fuselage (2) and to thereby reduce the total nose-up pitching moment created by the fuselage (2) in forward flight until the total nose-up pitching moment is substantially equal to the nose-down pitching moment created by the at least one main rotors (13, 26).

29. The method according to claim 20, **characterized by** performing the anti-torque function by a single propulsion means, e.g. a propeller (24) or by differential thrust between two propulsion means (24).

## Patentansprüche

1. Senkrecht startendes und landendes Luftfahrzeug (1, 46) mit:
a. einer Antriebsaggregateinheit (19) mit mindestens einem Hauptrotor (13, 26),
b. einem ringförmigen Rumpf (2), wobei eine Mittelebene durch den Rumpf definiert ist durch eine Längs- und eine Querachse (6, 7), wobei der ringförmige Rump (2) radial innen einen Durchgang (5) aufweist mit einer zu der Ebene senkrechten Mittelachse (8), wobei der Durchgang (5) sich zwischen einer Oberseite (9) und einer Unterseite (10) des ringförmigen Rumpfes (2) erstreckt, und wobei der mindestens eine Hauptrotor (13, 26) eine Drehachse aufweist, die im Wesentlichen koaxial zu der Mittelachse (8) des Durchgangs (5) verläuft, wobei der Rumpf (2) in Richtung der Längsachse (6) einen vorderen Teil und einen hinteren Teil (3, 4) aufweist,
c. einem Paar seitlicher Flügel (40), die zueinander gegenüberliegend außerhalb des Rumpfes (2) angebracht sind, und
d. einem integriertem Antriebssystem mit:
d1. einer Mehrzahl von Stützstreben (22) zwischen der Antriebsaggregateinheit (19) und dem Rumpf (2),
d2. mindestens einem Motor (18) in der Antriebsaggregateinheit (19) für den Antrieb des mindestens einen Hauptrotors (13, 26), und
d3. einem mechanischen Verbindungssystem zwischen dem mindestens einen Motor (18) und dem mindestens einen Hauptrotor (13, 26), wobei
d4. mindestens zwei Vortriebsmittel (24) vorgesehen sind, deren jeweilige Drehachse im Wesentlichen parallel zu der Längsachse (6) ausgerichtet ist,
**dadurch gekennzeichnet, dass** mindestens eines der Vortriebsmittel (24), zum Beispiel Propeller oder Strahlturbinen, an jedem der Flügel (40) installiert ist, und das mechanische Verbindungssystem mit dem Vortriebsmittel (24) verbunden ist, um das Vortriebsmittel (24) anzutreiben.

2. Luftfahrzeug (1, 46) nach Anspruch 1, wobei der Antrieb zwei Turbomotoren (18) aufweist, die in einer zentralen Antriebsaggregateinheit (19) montiert sind.

3. Luftfahrzeug (46) nach Anspruch 1, wobei zwei koaxiale, gegenläufig rotierende Hauptrotoren (13, 26) mit einem axialen Abstand von 1 m bis 2 m zwischen sich vorgesehen sind.

4. Luftfahrzeug (1, 46) nach Anspruch 1, wobei eine Mehrzahl von Stützstreben (22) an einem radial inneren Umfang am Boden (10) des ringförmigen Rumpfes (2) befestigt sind.

5. Luftfahrzeug (1, 46) nach Anspruch 1, wobei das integrierte Antriebssystem Steuermittel für das Verhalten des Luftfahrzeugs (1) beim Abheben, Steigflug, einer Rollbewegung und einer Gierbewegung sowohl im Schwebeflug als auch im Vorwärtsflug, vorzugsweise Mittel zur Änderung sowohl der kollektiven als auch der zyklischen Rotorblattneigung (14, 27) des mindestens einen Hauptrotors (13, 26) in Abhängigkeit von den Kräften und Drehmomenten, die durch eine Luftströmung durch den und entlang dem ringförmigen Rumpf (2) induziert werden, aufweist.

6. Luftfahrzeug (1, 46) nach Anspruch 1, wobei ein Luftkissensystem (16) am Boden (10) des Rumpfes (2) als eine Lande- und Start-Hilfsvorrichtung und als ein Diffusionsteil vorgesehen ist.

7. Luftfahrzeug (1, 46) nach Anspruch 1, wobei mindestens ein Hauptrotor (13, 26) auf der Höhe des oberen Endes (9) des Rumpfes (2) angeordnet ist.

8. Luftfahrzeug (1, 46) nach Anspruch 1, wobei Stabilisierungs- und Manövrier-Steuerungsflächen (45) für die Neigung an den Flügeln (40) vorgesehen sind, wobei die Neigungssteuerungsflächen (45) relativ zu der Stirnseite des Flügels (40) beweglich sind.

9. Luftfahrzeug (1, 46) nach Anspruch 1, wobei Stabilisierungs- und Manövrier-Flächen mit mindestens einem Seitenleitwerk (44) und einer Längssteuerungsfläche als vertikalem Stabilisierer (41) an den Seitenenden der Flügel (40) vorgesehen sind, wobei die mindestens eine Längssteuerungsfläche relativ zu der Stirnseite des Seitenleitwerks (44) beweglich ist.

10. Luftfahrzeug (1, 46) nach Anspruch 1, wobei das mechanische Verbindungssystem mit Steuermitteln für die kollektive und die zyklische Neigung der Rotorblätter (14, 27) des mindestens einen Hauptrotors (13, 26) und mit einer kollektiven Neigungssteuerung der Propellerblätter des Vortriebsmittels (24) versehen ist.

11. Luftfahrzeug (1, 46) nach Anspruch 2, wobei die Antriebsaggregateinheit (19) unterhalb oder innerhalb des Durchgangs (5) an den Boden (10) des Rumpfes (2) angrenzend montiert ist.

12. Luftfahrzeug (1, 46) nach Anspruch 1, wobei die Stützstreben (22) hohl sind, als Raum für Fracht und Passagiere, Fahrzeugflug- und Steuersysteme, einschließlich Steuer- und Anschlussleitungen, Treibstoff- und/oder mechanische Verbindungssysteme.

13. Luftfahrzeug (1, 46) nach Anspruch 1, wobei der mindestens eine Hauptrotor (13, 26) einen Durchmesser von 12 bis 25 m oder von 16 bis 22 m aufweist, und ein Lufteinlass (12), der durch den ringförmigen Rumpf (2) gebildet wird, immer außerhalb des mindestens einen Hauptrotors (13, 26) liegt und einen Radius zwischen 13 und 7 m hat.

14. Luftfahrzeug (1, 46) nach Anspruch 1, wobei die Stützstreben (22) aus leichtgewichtigem Verbundmaterial oder Metall gefertigt sind.

15. Luftfahrzeug (1, 46) nach Anspruch 1, wobei der Rumpf (2) als ein geschlossener Torus geformt ist.

16. Luftfahrzeug (1) nach Anspruch 1, wobei die mindestens zwei Vortriebsmittel (24) Propeller sind, und wobei die Differenz des kollektiven Anstellwinkels der Propellerblätter mindestens eines Propellers (24) auf einer Seite des Rumpfs (2) relativ zu den Propellerblättern des mindestens einen Propellers (24) auf der gegenüberliegenden Seite des Rumpfs (2) eine Schubdifferenz zwischen den beiden Propellern (24) entwickelt, wobei die Schubdifferenz gegen das Drehmoment gerichtet ist, das von dem Hauptrotor (13) erzeugt wird.

17. Luftfahrzeug (1, 46) nach Anspruch 1, wobei die Flügel (40) in dem hinteren Teil (4) des Luftfahrzeugs (1, 46) angeordnet sind, und wobei die Flügel (40) so geformt sind, dass sie beim Vorwärtsflug zusätzliche Auftriebskräfte liefern.

18. Luftfahrzeug (1) nach Anspruch 1, wobei mindestens ein Teil des Durchgangs (5) als ein Diffusor geformt ist, wobei der Diffusorteil des Durchgangs (5) am Boden des Durchgangs (5) mit einem maximalen Querschnitt endet, der mindestens dem Querschnitt des mindestens einen Hauptrotors (13, 26) entspricht, wobei der Diffusor einen minimalen Querschnitt aufweist, der durch ein Verhältnis von 0,7 bis 0,8 bis 1 für den minimalen Querschnitt/maximalen Querschnitt definiert ist.

19. Luftfahrzeug (1) nach Anspruch 1, wobei in dem Rumpf (2) im Wesentlichen symmetrische Passagier- und oder Frachtabteile in seinem Vorderteil (3) und seinem hinterem Teil (4) untergebracht sind.

20. Verfahren für den Betrieb eines Luftfahrzeugs (1, 46) nach einem der vorstehenden Ansprüche, **gekennzeichnet durch**:
Erzeugen eines Auftriebs des Luftfahrzeugs (1, 46) mit dem mindestens einen Hauptrotor (13, 26), und
Erzeugen eines horizontalen Schubs und/oder Gegendrehmoments am Luftfahrzeug (1, 46) mit den Vortriebsmitteln (24), die seitlich außerhalb des Rumpfes (2) angebracht sind.

21. Verfahren nach Anspruch 20, **gekennzeichnet durch**:
Steuern des Auftriebs **durch** Anpassen der kollektiven Neigung der Rotorblätter (14, 27) des mindestens einen Hauptrotors (13, 26) in Abhängigkeit von den Flugbedingungen, um somit Auftrieb erzeugende Kräfte am Hauptrotor (13, 26) und am Rumpf (2) zu erzeugen.

22. Verfahren nach Anspruch 20, **gekennzeichnet durch**:
Steuern des Luftfahrzeugs (1, 46) **durch** selektives Anlegen einer zyklischen Längsneigung der Rotorblätter (14, 27) des mindestens einen Hauptrotors (13, 26) in Abhängigkeit von den Flugbedingungen, um **dadurch** Neigungskräfte an dem mindestens einen Hauptrotor (13, 26) und dem Rumpf (2) zu erzeugen.

23. Verfahren nach Anspruch 22, **gekennzeichnet durch**:
Erzeugen von zusätzlichen Neigungskräften am Luftfahrzeug (1, 46) im Flugmodus **durch** die beiden Neigungssteuerungsflächen (45), die im hinteren Teil (4) des Rumpfes (2) beweglich angeordnet sind.

24. Verfahren nach Anspruch 20, **gekennzeichnet durch**:
Steuern der Fahrzeugrollbewegung **durch** selektives Anlegen eines zyklischen seitlichen Neigungswinkels der Rotorblätter (14, 27) des Hauptrotors (13, 26) in Abhängigkeit von den Flugbedingungen, um dadurch Rollkräfte auf den mindestens einen Hauptrotor (13, 26) und den Rumpf (2) auszuüben.

25. Verfahren nach Anspruch 24, **gekennzeichnet durch**:
Erzeugen von zusätzlichen Rollkräften im Flugmodus des Luftfahrzeugs (1, 46) **durch** eine der Neigungssteuerungsflächen (45), die im hinteren Teil (4) des Rumpfes (2) beweglich sind.

26. Verfahren nach Anspruch 20, **gekennzeichnet durch**:
Erzeugen einer Giersteuerung des Luftfahrzeugs (1, 46) **durch** Anlegen einer Schubdifferenz im Flugmodus zwischen den mindestens zwei Vortriebsmitteln (24) in Abhängigkeit von den Flugbedingungen, um somit die erforderliche Drehmomentfrequenz zu erzeugen, um die Giersteuerung durchzuführen.

27. Verfahren nach Anspruch 20, **gekennzeichnet durch**:
Erzeugen von Gierkräften im Flugmodus des Luftfahrzeugs (1, 46) durch beide bewegliche Seitenruder (21) des vertikalen Stabilisierers (41) im hinteren Teil (4) des Rumpfes (2).

28. Verfahren nach Anspruch 20, **gekennzeichnet durch**:
Dämpfen eines jeden Hochzieh-Drehmoments, das von dem ringförmigen Rumpf (2) während des Vorwärtsflugs erzeugt wird **durch** selektives Anlegen einer zyklischen Neigungswinkelverstellung bei dem mindestens einen Hauptrotor (13, 26), um selektiv das Profil der Luftströmung zu verändern, die in den Durchgang (5) einströmt, um **dadurch** ein entgegenwirkendes Neigungsdrehmoment am ringförmigen Rumpf (2) zu erzeugen, und um **dadurch** das gesamte Hochzieh-Neigungsdrehmoment zu reduzieren, das **durch** den Rumpf (2) beim Vorwärtsflug erzeugt wird, bis das gesamte Hochzieh-Neigungsdrehmoment im Wesentlichen gleich dem Längsneigungs-Drehmoment nach unten ist, das **durch** den wenigstens einen Hauptrotor (13, 26) erzeugt wird.

29. Verfahren nach Anspruch 20, **gekennzeichnet durch**:
Durchführen einer Gegendrehmomentfunktion **durch** ein einzelnes Vorschubmittel, zum Beispiel einen Propeller (24), oder **durch** eine Schubdi.fferenz zwischen zwei Vorschubmitteln (24).

## Revendications

1. Véhicule aérien à décollage et atterrissage vertical (1, 46) comprenant:
a. un groupe moteur (19) avec au moins un rotor principal (13, 26),
b. un fuselage de type tore (2), un plan médian à travers ledit fuselage étant défini par un axe longitudinal et transversal (6, 7), ledit fuselage de type tore (2) renfermant en position radiale un conduit (5) avec un axe central (8) perpendiculaire audit plan, ledit conduit (5) se situant entre un haut (9) et un bas (10) dudit fuselage de type tore (2) et ledit au moins un rotor principal (13, 26) ayant un axe de rotation essentiellement coaxial avec l'axe central (8) dudit conduit (5), ledit fuselage (2) ayant une partie avant et arrière (3, 4) le long dudit axe longitudinal (6),
c. une paire d'ailes latérales (40) fixées à l'opposé l'une de l'autre à l'extérieur du fuselage (2), et
d. un système d'entraînement intégré comprenant :
d1. une pluralité de jambes de support (22) entre le groupe moteur (19) et le fuselage (2),
d2. au moins un moteur (18) dans le groupe moteur (19) pour entraîner ledit au moins un rotor principal (13, 26), et
d3. un système d'interconnexion mécanique entre ledit au moins un moteur (18) et ledit au moins un rotor principal (13, 26), dans lequel
d4. au moins deux moyens de propulsion (24) sont prévus avec un axe de rotation respectif dirigé de façon essentiellement parallèle audit axe longitudinal (6),
**caractérisé en ce qu'**au moins un desdits moyens de propulsion (24), par ex. des hélices ou des turboréacteurs, est installé sur chacune desdites ailes (40) et le système d'interconnexion mécanique est relié aux moyens de propulsion (24) pour entraîner lesdits moyens de propulsion (24).

2. Véhicule aérien (1, 46) selon la revendication 1, dans lequel ledit moteur comprend deux turbomoteurs (18) montés dans un groupe moteur central (19).

3. Véhicule aérien (46) selon la revendication 1, dans lequel sont prévus deux rotors principaux coaxiaux contrarotatifs (13, 26) avec entre les deux une distance axiale de 1 m à 2 m.

4. Véhicule aérien (1, 46) selon la revendication 1, dans lequel une pluralité de jambes de support (22) est fixée à une circonférence radiale intérieure dans le bas (10) du fuselage de type tore (2).

5. Véhicule aérien (1, 46) selon la revendication 1, dans lequel le système d'entraînement intégré comprend des moyens de commande pour l'assiette du véhicule aérien (1) en portance, tangage, roulis et lacet en vol à la fois stationnaire et en translation, comprenant de préférence des moyens pour appliquer des changements de pas collectif et cyclique aux pales (14, 27) dudit au moins un rotor principal (13, 26) en fonction des forces et moments induits par l'écoulement d'air à travers et le long du fuselage de type tore (2).

6. Véhicule aérien (1, 46) selon la revendication 1, dans lequel un système de coussin d'air (16) est prévu dans le bas (10) du fuselage (2) en tant que dispositif d'aide à l'atterrissage et au démarrage et comme une partie de diffusion.

7. Véhicule aérien (1, 46) selon la revendication 1, dans lequel au moins un rotor principal (13, 26) est situé de niveau avec le haut (9) du fuselage (2).

8. Véhicule aérien (1, 46) selon la revendication 1, dans lequel des surfaces de contrôle de stabilisation et de manoeuvre (45) pour le tangage sont prévues au niveau des ailes (40), lesdites surfaces de contrôle du tangage (45) étant mobiles par rapport à la partie avant de l'aile (40).

9. Véhicule aérien (1, 46) selon la revendication 1, dans lequel des surfaces de stabilisation et de manoeuvre avec au moins une ailette (44) et une surface de contrôle de direction comme stabilisateur vertical (41) sont prévues aux extrémités latérales des ailes (40), ladite au moins une surface de contrôle de direction étant mobile par rapport à la partie avant de l'ailette (44).

10. Véhicule aérien (1, 46) selon la revendication 1, dans lequel ledit système d'interconnexion mécanique est pourvu de moyens de commande de pas collectif et de pas cyclique des pales (14, 27) de l'au moins un rotor principal (13, 26) et de commande de pas collectif des pales d'hélice desdits moyens de propulsion (24).

11. Véhicule aérien (1, 46) selon la revendication 2, dans lequel le groupe moteur (19) est monté au-dessous ou à l'intérieur du conduit (5) de façon contiguë au bas (10) du fuselage (2).

12. Véhicule aérien (1, 46) selon la revendication 1, dans lequel lesdites jambes de support (22) sont creuses en tant qu'espace pour une cargaison et un/des passager(s), des systèmes de vol et de commande du véhicule, notamment des câbles de commande et d'alimentation, du carburant et/ou des systèmes d'interconnexion mécanique.

13. Véhicule aérien (1, 46) selon la revendication 1 dans lequel l'au moins un rotor principal (13, 26) a un diamètre de 12 m à 25 m ou 16 m à 22 m et une lèvre d'entrée d'air (12) établie par le fuselage de type tore (2) est toujours à l'extérieur de l'au moins un rotor principal (13, 26) avec un rayon compris entre 13 m et 7 m.

14. Véhicule aérien (1, 46) selon la revendication 1, dans lequel lesdites jambes de support (22) sont fabriquées dans un matériau composite ou métal léger.

15. Véhicule aérien (1, 46) selon la revendication 1, dans lequel ledit fuselage (2) est façonné comme un tore fermé.

16. Véhicule aérien (1) selon la revendication 1 dans lequel les au moins deux moyens de propulsion (24) sont des hélices et dans lequel la différence de pas collectif des pales d'hélice d'au moins une hélice (24) sur un côté du fuselage (2) par rapport aux pales d'hélice d'au moins une hélice (24) sur le côté opposé du fuselage (2) provoque un différentiel de poussée entre les deux hélices (24), ledit différentiel de poussée étant dirigé contre le couple généré par un rotor principal (13).

17. Véhicule aérien (1, 46) selon la revendication 1, les ailes (40) se trouvant dans la partie arrière (4) du véhicule aérien (1, 46) et les ailes (40) étant profilées pour appliquer des forces de sustentation supplémentaires en vol en translation.

18. Véhicule aérien (1) selon la revendication 1, dans lequel au moins une partie du conduit (5) est façonnée comme un diffuseur, ladite partie de diffuseur du conduit (5) se terminant en bas du conduit (5) avec une section transversale maximale au moins égale à la section transversale de l'au moins un rotor principal (13, 26), ledit diffuseur ayant une section transversale minimale définie par un rapport section transversale minimale/section transversale maximale de 0,7 à 0,8 à 1.

19. Véhicule aérien (1) selon la revendication 1, dans lequel le fuselage (2) abrite des compartiments de passagers et/ou de cargaison sensiblement symétriques dans ses parties avant (3) et arrière (4).

20. Procédé de fonctionnement d'un véhicule aérien (1, 46) selon l'une quelconque des revendications précédentes, **caractérisé par** :
l'application d'une portance au véhicule aérien (1, 46) au moyen dudit au moins un rotor principal (13, 26) et
l'application d'une poussée horizontale et/ou d'un couple de réaction au véhicule aérien (1, 46) au moyen desdits moyens de propulsion (24) disposés latéralement à l'extérieur dudit fuselage (2).

21. Procédé selon la revendication 20, **caractérisé par** :
le contrôle de la portance en adaptant le pas collectif des pales (14, 27) dudit au moins un rotor principal (13, 26) en fonction des conditions de vol pour produire ainsi des forces créant une portance à la fois sur le rotor principal (13, 26) et le fuselage (2).

22. Procédé selon la revendication 20, **caractérisé par** :
le contrôle du véhicule aérien (1, 46) en appliquant sélectivement un pas cyclique longitudinal aux pales (14, 27) dudit au moins un rotor principal (13, 26) en fonction des conditions de vol pour produire ainsi des forces de tangage à la fois sur l'au moins un rotor principal (13, 26) et le fuselage (2).

23. Procédé selon la revendication 22, **caractérisé par** :
la création en mode de vol du véhicule aérien (1, 46) de forces de tangage supplémentaires au moyen des deux surfaces de contrôle du tangage (45) mobiles dans la partie arrière (4) du fuselage (2).

24. Procédé selon la revendication 20, **caractérisé par** :
le contrôle du roulis du véhicule en appliquant sélectivement un pas cyclique latéral aux pales (14, 27) dudit au moins un rotor principal (13, 26) en fonction des conditions de vol pour produire ainsi des forces de roulis à la fois sur l'au moins un rotor principal (13, 26) et le fuselage (2).

25. Procédé selon la revendication 24, **caractérisé par** :
la création en mode de vol du véhicule aérien (1, 46) de forces de roulis supplémentaires par une des surfaces de contrôle du tangage (45) mobiles dans la partie arrière (4) du fuselage (2).

26. Procédé selon la revendication 20, **caractérisé par** :
l'application d'une commande de lacet audit véhicule aérien (1, 46) en appliquant en mode de vol un différentiel de poussée entre lesdits au moins deux moyens de propulsion (24) en fonction des conditions de vol pour produire ainsi le différentiel de couple nécessaire pour effectuer une commande de lacet.

27. Procédé selon la revendication 20, **caractérisé par** :
la création en mode de vol du véhicule aérien (1, 46) de forces de lacet par les deux gouvernes de direction mobiles (21) du stabilisateur vertical (41) dans la partie arrière (4) du fuselage (2).

28. Procédé selon la revendication 20, **caractérisé par** :
la diminution de tout moment de cabrage créé par le fuselage de type tore (2) pendant un vol en translation en appliquant sélectivement un pas cyclique audit au moins un rotor principal (13, 26) pour faire varier sélectivement le motif d'écoulement d'air dans ledit conduit (5) pour produire ainsi un moment de tangage opposé sur ledit fuselage de type tore (2) et pour réduire ainsi le moment de cabrage total créé par le fuselage (2) en vol en translation jusqu'à ce que le moment de cabrage total soit sensiblement égal au moment de piqué créé par l'au moins un rotor principal (13, 26).

29. Procédé selon la revendication 20, **caractérisé par** la réalisation de la fonction anticouple par un seul moyen de propulsion, par ex. une hélice (24) ou par poussée différentielle entre deux moyens de propulsion (24).
